# EUROPEAN PATENT SPECIFICATION

(11) **EP 2 716 083 B1**
(45) Date of publication and mention of the grant of the patent: **06.03.2019**
(21) Application number: 12794025.2
(22) Date of filing: 22.05.2012
(51) Int. Cl.: H04M 15/00, H04L 12/14, H04L 12/24, H04W 88/18, H04L 29/08, G06Q 20/14

(54) **METHOD AND APPARATUS FOR CHARGING IN A COMMUNICATION NETWORK**
LADEVERFAHREN UND -VORRICHTUNG IN EINEM KOMMUNIKATIONSNETZ
PROCÉDÉ ET APPAREIL DE CHARGE DANS UN RÉSEAU DE COMMUNICATION

(30) Priority: 31.05.2011 CN 201110157680
(43) Date of publication of application: 09.04.2014
(73) Proprietor: Alcatel Lucent, 91620 Nozay (FR)
(72) Inventor: LI, Xiangyang, Shanghai 201206 (CN); CAI, Yigang, Naperville, IL 60564 (US)
(74) Representative: Novagraaf Technologies
(86) International application number: PCT/IB2012/001072
(87) International publication number: WO 2012/164384

(56) References cited:
- EP-A1- 2 262 166
- EP-A2- 2 518 937
- WO-A1-2010/020076
- CN-A- 101 075 886
- CN-A- 101 237 333
- CN-A- 101 296 093
- US-A1- 2004 117 311
- US-A1- 2004 243 475
- US-A1- 2008 249 936
- US-A1- 2010 049 640
- US-A1- 2012 095 905

## Description

### Field of the invention

The present disclosure relates to the field of communication, and particularly to the field of charging in a mobile network.

### Background of the invention

With 4G LTE mobile radio access technologies, a network bandwidth becomes larger to thereby facilitate an access of a device to a web-based application server, consequently accelerating the development of the mobile Internet. As compared with earlier mobile devices, enhanced intelligent mobile phone devices (e.g., iPhone, iPad, Android system-based mobile phones and other terminal devices) and predominantly web-based applications (e.g., applications developed by some corporations to be suitable for terminal devices) enable an end user to access the Internet with a better browser or application-based web experience.

The integration of telecommunication technologies with mobile web applications is a new technical development trend of the next generation of mobile technologies.

A web service over the Internet has been simply adapted with existing 3GPP Parlay X payment or an OMA HTTP RESTful-based payment interface. However an existing charging system of a mobile operator performs online charging and offline charging in a 3GPP Diameter-based charging infrastructure. An increasing number of network service providers have adapted the Diameter as a charging protocol to be suitable for more services.

As established by the existing 3GPP, how to perform Parlay-based charging of a web application service has been defined in 3GPP TS 29.199-6, " Open Service Access (OSA); Parlay X web; Part 6: Payment". An OSA charging function enables a web application to charge a user account for a product and a service offered to a user. This results at an operator in a bill of soft products (e.g., downloaded software, music, etc.) and hard products (e.g., a CD, a book, etc.) offered potentially from a third party. Furthermore the OSA charging function will maintain non-money user accounts. The application can add or deduct some non-money units into or from these accounts. Similar examples of related priori art are EP2262166, US2004/243475, WO2010/020076 and CN101237333.

### Summary of the invention

The inventors of the invention have identified from a study of the prior art that the existing 3GPP Parlay X payment interface provides just an elementary charging interface to charge web services based on traffics of the web services and web service traffics. A web application will take an open Application Programming Interface (API) as a second charging request to an access gateway. However the existing open API does not relate to any useful network charging information parameter and policy information. The existing 3GPP Parlay X payment interface and OMA RESTful web service payment interface provide just very elementary charging interfaces to charge web services based on traffics of the web services.

If there is neither network information nor policy information in a web service charging interface, then a charging or expenditure of a web application will not reflect how an end user consumes a network resource to access the web application, and a network operator can not define a working expenditure plan to control the usage of the network resource by the web service application. This is a drawback in an existing charging policy of the operator.

An Internet web service has been simply adapted with the existing 3GPP Parlay X payment or the OMA, HTTP and RESTful-based payment interfaces. However the existing charging system of the mobile operator performs 3GPP Diameter-based online charging and offline charging. An increasing number of network service providers adopt the Diameter as a charging protocol for almost all of the services. The Parlay X of a charging interface has evolved from 3GPP Diameter-based charging and somewhat contributed to network integration for charging of a web application service.

For web service payment of a click to dial service initiated by a web user from a web application, network charging information and policy information may be absent for the web application. The web application will take an open API as a second charging request to an access gateway. However the existing open API does not relate to any network charging-related parameter information or policy information.

The inventors of the invention have identified that if a network operator is provided in a secured and controlled way with the ability to expose open APIs to an external third party and an internal application, then interoperation of a web application with a telecommunication network can be facilitated to support a network-based service from an application platform.

Moreover the inventors of the invention have further identified that network context information of a web service is retrieved and utilized to charge the web service, and also an existing charging interface is modified adaptively, thereby addressing such a problem that a charging/expenditure allotted by a charging system to a web application can not reflect how an end user consumes a network resource.

The invention can be applicable to the mobile payment of a mobile web service. In some embodiments of the invention, there is provided payment options for a web application server, and there is also provided a solution for a mobile operator to expose a payment interface to an external web application server so as to generate a revenue stream.

The present invention is defined in the attached independent claims. Further, preferred embodiments may be found in the dependent claims appended thereto.

### Brief description of drawings

The foregoing and other features of the invention will become more apparent from the following detailed description of the embodiments illustrated in the drawings throughout which identical reference numerals denote identical or similar components and in which:
Fig.1 illustrates a device architecture diagram of a communication network to which a charging method according to an example of the invention is applicable;
Fig.2 illustrates a flow chart of a method of initiating a charging request in a communication network according to an embodiment of the invention;
Fig.3 illustrates a method of charging a web service in a communication network according to an embodiment of the invention; and
Fig.4 illustrates a function block diagram of a device for initiating a charging request in a communication network according to an embodiment of the invention.

### Detailed description of embodiments

Web applications are more popular than ever due to the occurrence of a variety of driving factors including, for example, more powerful intelligent mobile phones, rich web application services and bandwidth-larger rapid access technologies. As relevant web applications have been applied widely at the side of end users, how to charge a web application service has gradually become an important issue for a telecommunication operator to guarantee its revenue in the industry.

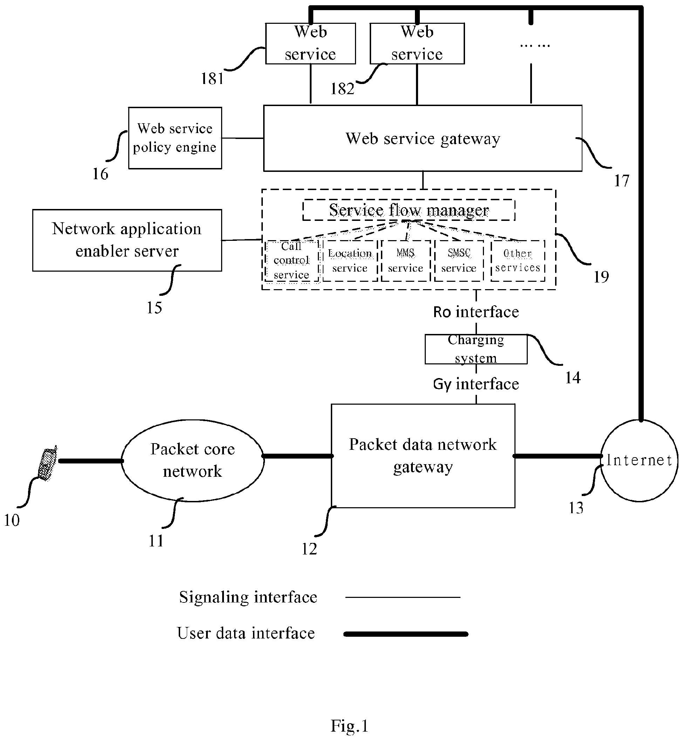

Fig.1 illustrates a device architecture diagram of a communication network to which a charging method according to an example of the invention is applicable. As illustrated, the topology of the communication network includes a user equipment 10, a packet core network 11, a packet data network gateway 12, the Internet 13, a charging system 14, a network application enabler server 15, a web service policy engine 16, a web service gateway 17, and a first web service 181 and a second web service 182 operating in the communication network.

If the user equipment 10 accesses the web service 181 and the web service 182 provided by a third party at a time, then the user equipment 10 accesses the Internet 13 over the packet core network 11 and the packet data network gateway 12 and also accesses the two web services, and then in response to the access to the web service 181 and the web service 182, the web service gateway 17 instructs the charging system 14 via an Ro interface or another interface to charge the two services. Particularly the charging system 14 charges the user equipment 10 for accessing the web service 181 and the web service 182 typically by service identifiers (service IDs) or by further counting a period of time for the access of the user equipment 10 to the services.

The inventors have identified that network information and policy information in the web service charging interface is absent in the charging process, so a charging/expenditure of an web application will not reflect how an end user consumes a network resource to access the web application, and a network operator can not define a working expenditure plan to control the usage of the network resource by the web service application. This is a drawback in an existing charging policy of the operator.

Also the inventors have identified that the web service gateway 17 can retrieve network context information related to an accessed web service and transmit the network context information of the web service to the charging system 14 via a communication interface to be used for its charging, thereby performing more accurate charging.

Of course the retrieval at the web service gateway 17 of the network context information of the web service can be performed by a separate network entity, e.g., a web service gateway or an access gateway of the web service, or an entity unit performing the retrieval function can be integrated with the web service gateway 17 to thereby constitute a web service gateway suite. The invention will not be limited to any specific implementation thereof. In some embodiments of the invention to be described later, it is assumed that the steps of some embodiments of the invention are illustratively performed only by a web service gateway suite including the web service gateway 17 and some modules configured to retrieve network context information of a web service, e.g., a service combination manager 19 introduced in the embodiment of the invention as illustrated in Fig.1. Furthermore, if the service combination manager 19 is functionally integrated into the web service gateway 17, then correspondingly the network application enabler server 15 can be connected to the web service gateway 17.

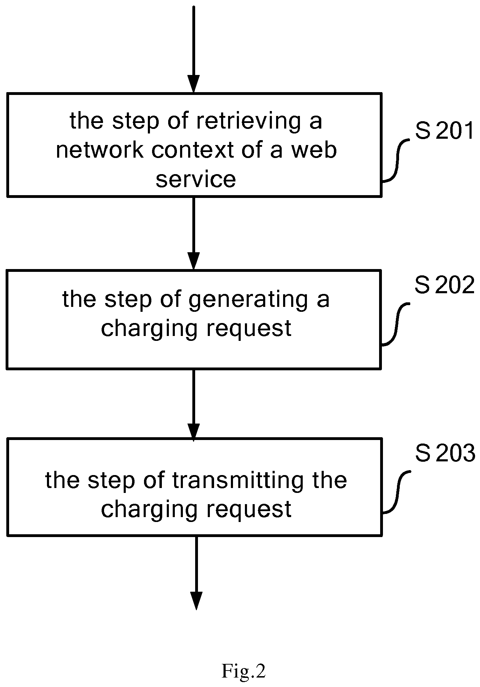

Fig.2 illustrates a flow chart of a method of initiating a charging request in a communication network according to an embodiment of the invention. As illustrated, the method includes the step S201 of retrieving a network context of a web service, the step S202 of generating a charging request and the step S203 of transmitting the charging request.

In the step S201, a web service gateway suite retrieves network context information of a web service from a data repository corresponding to the web service in response to a first charging request from the web service.

In the step S202, the web service gateway suite generates a second charging request from the network context information.

In the step S203, the web service gateway suite transmits the second charging request to a charging system.

Particularly the data repository corresponding to the web service can further be one or more different data repositories dependent upon the different type of the web service. Correspondingly, the step S201 of retrieving the network context information may further include two sub-steps of: A1. retrieving a charging policy from a policy server, the charging policy indicating a service combination of the web service; and A2. retrieving network context information of respective sub-services in the service combination from data repositories corresponding to the respective sub-services.

Optionally, the charging policy in the step A1 is generated from any one or more of the following information of the web service: mobile context information, an invoked mobile operator enabler service, a network charging policy and web service context information.

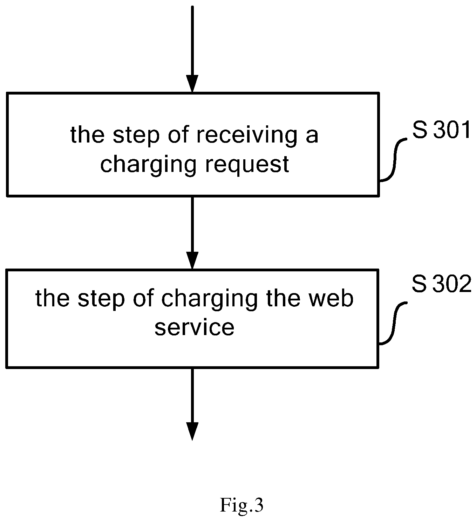

Fig.3 illustrates a method of charging a web service in a communication network according to an embodiment of the invention. As illustrated, the method includes the step S301 of receiving a charging request and the step S302 of charging a web service.

In the step S301, a charging system 14 receives a charging request from a web service gateway suite. The charging request includes network context information of the web service, which is retrieved by the web service gateway suite.

In the step S302, the web service is charged according to the network context information. The network context information reflects details of the usages of the network by respective sub-services in the web service.

Optionally, the step S302 may further includes the step of: charging the web service based upon application information and/or a user account configuration of the web service and according to the network context information.

Now it is assumed the user equipment 10 in Fig.1 runs a user application at the side of the user equipment and accesses the network and also accesses the web service 181, and the web service 181 is a service capable of providing an end user with weather information. Taking this application scenario as an example, the methods according to the foregoing embodiments of the invention will be described with reference to Fig.2 and Fig.3.

First the third party application 181 transmits a first charging request to the web service gateway 17 when the end user 10 accesses the third party application 181 to access related web information.

Then the web service gateway 17 transmits a charging policy request to the web service policy engine 16, and the engine 16 determines the requested service as a location-based weather service which includes three sub-services, i.e., a positioning service, a weather service and an MMS service.

Next the web service gateway 17 optionally transmits the request to the service combination manager 19 in the web service gateway suite, which is dedicated to handling such a type of web service request, to retrieve service context information of the location-based weather service 181, and this retrieval step can further utilize a separate service module in the service combination manager 19 to retrieve the following network context information. The separate service module can include a location service, an MMS service, an SMSC service, a call control service and any other service to be loaded, as illustrated. In this embodiment, the location service in the service combination manager 19 can retrieve context information of the location service from a positioning server of the network application enabler server 15, and the MMS service in the service combination manager 19 can retrieve context information of a multimedia message service from an MMSC server in the network application enabler server 15. Of course, the service combination manager 19 can retrieve weather service information from a third party web service provider.

Then the web service gateway 17 inserts the retrieved context information of the location service, the context information of the MMS service and the context information of the weather service into a payment interface. Then the web service gateway 17 can trigger a charging request to the charging system 14, and then the charging system 14 charges the web service according to the specific network context information of the web service in the charging request upon reception of the charging request in the step S302.

Optionally, the web service gateway suite in the topology illustrated in Fig.1 can further include a payment service module and a normalization interface (not illustrated), and the payment service module is communicatively connected with the Ro interface of the charging system 14 via the normalization interface. Correspondingly, in the step S203, the web service gateway 17 in the web service gateway suite transmits the charging request to the payment service module for some internal processing, and then normalizes it into a charging request compatible with a telecommunication network via the normalization interface and next transmits the normalized charging request to the charging system 14.

The respective sub-services in the service combination in some of the foregoing embodiments can include but will not be limited to any one or more of: a positioning service, a Quality of Service (QoS) control service, a call control service, a charging service, a short messaging service, a multimedia short messaging service, a packet switch service, a Wireless Local Area Network (WLAN) service, a push-to-talk service, a multimedia telephony service and an instant messaging service.

The mobile context information in some of the foregoing embodiments includes but will not be limited to any one or more of the following information of the web service: a location, a roaming status, a presence status and an access technology. The invoked mobile operator enabler service includes but will not be limited to any one or more of: a short messaging service, a multimedia short messaging service and an instant messaging service. Furthermore, the network charging policy includes but will not be limited to any one or more of: a mobile broadband, a service delivery priority and a charging mechanism. Furthermore, the web service context information includes but will not be limited to any one or more of: a web service provider, service category information, a duration and a traffic.

In some of the foregoing embodiments, the charging system 14 includes two components, i.e., an online charging system and an offline charging system. Correspondingly the step S202 further includes the steps of: determining that the web service shall be charged online and/or offline; and mapping the network context information into service information corresponding respectively to the respective sub-service in the web service to generate the second charging request. And the step S203 can further include the step of: transmitting the second charging request to the online charging component and/or the offline charging component according to information of the determination that the web service shall be charged online and/or offline.

In some of the foregoing embodiments, the data repository corresponding to the web service includes but will not be limited to any one of: a rule server, a charging server, a usage control entity, a positioning service, an SMS service, an MMS service, presence status information, an IMS service, a network resource service, a traffic detection function entity and a network or non-network user configuration data depository.

In some of the foregoing embodiments, the network context information includes but will not be limited to one or more of the following service information: positioning service information, QoS control service information, call control service information, charging service information, short messaging service information, multimedia short messaging service information, packet switch service information, WLAN service information, push-to-talk service information, multimedia telephony service information and instant messaging service information.

With the technical solutions in some of the foregoing embodiments, the existing web service payment solution can be enhanced greatly, and in practice it is proposed in the embodiments to charge a web service based upon a policy via a Diameter interface for online charging and offline charging of a mobile operator so that:
- The web access gateway or the web service gateway 17 is allowed to inquire the policy server 16 to determine parameters related to network information and a policy to be applied to an existing mobile web service;
- Mobile context information can be retrieved; and
- The web service gateway 17 translates an XML stream with the additional policy parameters and existing open API operating parameters into an open API and transmits it, and then can normalize the charging request into Diameter Ro/Rf.

Also the payment service module triggers the request to the interface normalization module based on a payment method registered by the user in a user database, and the interface normalization module translates the payment request into an OCS. The following service information can be used to charge a location-based weather combination service:
- LCS information;
- MMS information;
- WebApp service information;
- A Service-ID, i.e., a weather service; and
- A Provider-ID, i.e., a weather provider.

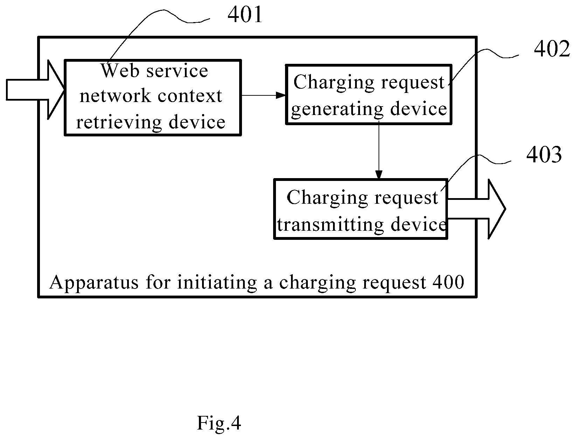

Fig.4 illustrates a function block diagram of an apparatus for initiating a charging request in a communication network according to an embodiment of the invention. As illustrated, the apparatus 400 for initiating a charging request includes: a web service network context retrieving device 401, a charging request generating device 402 and a charging request transmitting device 403.

Particularly the web service network context retrieving device 401 is configured to retrieve network context information of a web service from a data repository corresponding to the web service in response to a first charging request from the web service. The charging request generating device 402 is configured to generate a second charging request from the network context information. The charging request transmitting device 403 is configured to transmit the second charging request to a charging system.

Optionally the web service network context information retrieving device 401 in the apparatus 400 for initiating a charging request may further include: a charging policy retrieving device and a sub-service network context information retrieving device.

Particularly the charging policy retrieving device is configured to retrieve a charging policy from a policy server, the charging policy indicating a service combination of the web service. The sub-service network context information retrieving device is configured to retrieve network context information of respective sub-services in the service combination from data repositories corresponding to the respective sub-services
Correspondingly, in another embodiment of the invention, there is provided an apparatus for charging a web service in a communication network, which can typically be arranged in the charging system 14. The apparatus for charging a web service includes: a charging request receiving device configured to receive a charging request, the charging request including network context information of the web service; and a web service charging device configured to charge the web service according to the network context information.

In the methods or apparatuses according to some of the foregoing embodiments of the invention, a mobile operator and a web application provider can define a flexible web service charging model further based upon the following information:
- Mobile context information: a location, a roaming status, a presence status and an access technology;
- An invoked mobile operator enabler service: an SMS, an MMS, an IMS, etc.;
- A network charging policy: a mobile broadband, a service delivery priority and a charging mechanism; and
- Web service context information: a web service provider, service category information, a duration and a traffic.

Those skilled in the art the respective means as mentioned in the the invention can be implemented as hardware modules or as functional modules in software or as hardware modules integrated with functional modules in software.

In the claims, the term "comprising" will not preclude another means or step(s); the indefinite article "a/an" will not preclude plural; and the terms "first", "second", etc., are intended to designate a name but not to represent any specific order.

## Claims

1. A method of initiating a web service charging request in a communication network, the method comprising the steps of :
A. retrieving (S201) network context information of a web service from a data repository corresponding to the web service in response to a first charging request from the web service;
B. generating (S202) a second charging request from the network context information; and
C. transmitting (S203) the second charging request to a charging system,
A1. Retrieving a charging policy from a policy server, the charging policy indicating a service combination of the web service, and
A2. Retrieving network context information of respective sub-services in the service combination from data repositories corresponding to the respective sub-services.

2. The method according to claim 1, wherein an entity performing the step A, the step B and the step C is a web service gateway or is an access gateway of the web service.

3. The method according to claim 1, wherein in the step A2, the respective sub-services in the service combination comprises any one or more of:
a positioning service, a QoS control service, a call control service, a charging service, a short messaging service, a multimedia short message service, a packet switch service, a WLAN service, a push-to-talk service, a multimedia telephony service and an instant messaging service.

4. The method according to claim 1, wherein the charging policy in the step A1 is generated from any one or more of the following information of the web service:
mobile context information,
an invoked mobile operator enabler service,
a network charging policy, and
web service context information.

5. The method according to claim 4, wherein the mobile context information comprises any one or more of the following information of the web service:
a location, a roaming status, a presence status and an access technology;
the invoked mobile operator enabler service comprises any one or more of:
a short messaging service, a multimedia short messaging service and an instant messaging service;
the network charging policy comprises any one or more of:
a mobile broadband, a service delivery priority and a charging mechanism; and
the web service context information comprises any one or more of:
a web service provider, service category information, a duration and a traffic.

6. The method according to claim 1, wherein the step B further comprises:
determining that the web service shall be charged online and/of offline; and
mapping the network content information into service information corresponding respectively to the respective sub-service in the web service to generate the second charging request; and
the step C further comprises:
transmitting the second charging request to an online charging system and/or an offline charging system according to information of the determination that the web service shall be charged online and/or offline.

7. The method according to claim 1, wherein the data repository corresponding to the web service comprises any one of:
a rule server, a charging server, a usage control entity, a positioning service, an SMS service, an MMS service, presence status information, an IMS service, a network resource service, a traffic detection function entity and a network or non-network user configuration data depository.

8. The method according to claim 1, wherein before the step C, the method further comprises: normalization the second charging request into a second charging request compatible with a telecommunication network; and
C. transmitting the normalized second charging request to the charging system.

9. The method according to claim 8, wherein the step II further comprises:
charging the web service according to the network context information base upon application information or a user account configuration of the web service.

10. The method according to claim 9, wherein the network context information comprises one or more of the following service information:
positioning service information, QoS control service information, call control service information, charging service information, short messaging service information, multimedia short messaging service information, packet switch service information, WLAN service information, push-to-talk service information, multimedia telephony service information and instant messaging service information.

11. An apparatus (400) for initiating a charging request in a communication network, the apparatus comprising:
a web service network context retrieving device (401) configured to retrieve network context information of a web service from a data repository corresponding to the web service in response to a first charging request from the web service;
a charging request generating device (402) configured to generate a second charging request from the network context information; and
a charging request transmitting device (403) configured to transmit the second charting request to a charting system,
wherein the web service network context information retrieving device further comprises:
a charging policy retrieving device configured to retrieve a charging policy from a policy server, the charging policy indicating a service combination of the web service; and
a sub-service network context information retrieving device configured to retrieve network context information of respective sub-services in the service combination from data repositories corresponding to the respective sub-services.

## Patentansprüche

1. Verfahren zum Einleiten einer Webdienst-Abrechnungsanforderung in einem Kommunikationsnetzwerk, wobei das Verfahren aus den folgenden Schritten besteht:
A. Abrufen (S201) von Netzwerkkontextinformationen eines Webdienstes aus einem Datenspeicher entsprechend dem Webdienst in Reaktion auf eine erste Abrechnungsanforderung vom Webdienst;
B. Erzeugen (S202) einer zweiten Abrechnungsanforderung aus den Netzwerkkontextinformationen; und
C. Senden (S203) der zweiten Abrechnungsanforderung an ein Abrechnungssystem,
A1. Abrufen einer Abrechnungsrichtlinie von einem Richtlinienserver, wobei die Abrechnungsrichtlinie eine Dienstkombination des Webdienstes anzeigt, und
A2. Abrufen von Netzwerkkontextinformationen von jeweiligen Unterdiensten in der Dienstkombination aus Datenspeichern entsprechend den jeweiligen Unterdiensten.

2. Verfahren nach Anspruch 1, wobei eine Einheit, die den Schritt A, den Schritt B und den Schritt C durchführt, ein Webdienst-Gateway ist oder ein Zugangs-Gateway des Webdienstes ist.

3. Verfahren nach Anspruch 1, wobei in Schritt A2 die jeweiligen Unterdienste in der Dienstkombination eine oder mehrere aus Folgenden umfassen:
einen Positionierungsdienst, einen QoS-Steuerdienst, einen Aufrufsteuerdienst, eine Abrechnungsdienst, einen Kurznachrichtendienst, einen Multimedia-Kurznachrichtendienst, einen Paketvermittlungsdienst, einen WLAN-Dienst, einen Push-to-Talk-Dienst, einen Multimedia-Telefoniedienst und einen Sofortnachrichtendienst.

4. Verfahren nach Anspruch 1, wobei die Abrechnungsrichtlinie im Schritt A1 von einer oder mehreren der folgenden Informationen des Webdienstes erzeugt wird:
mobile Kontextinformationen,
ein aufgerufener Aktivierungsdienst für einen mobilen Betreiber,
eine Netzwerkabrechnungsrichtlinie, und
Webdienst-Kontextinformationen.

5. Verfahren nach Anspruch 4, wobei die mobilen Kontextinformationen eine oder mehrere der folgenden Informationen des Webdienstes umfassen:
einen Ort, einen Roaming-Status, einen Anwesenheitsstatus und eine Zugangstechnologie;
der aufgerufene Aktivierungsdienst für einen mobilen Betreiber umfasst eines oder mehrere von Folgendem:
einen Kurznachrichtendienst, einen Multimedia-Kurznachrichtendienst und einen Sofortnachrichtendienst;
die Netzwerkabrechnungsrichtlinie umfasst eines oder mehrere von Folgendem:
ein mobiles Breitband, eine Dienstbereitstellungspriorität und einen Abrechnungsmechanismus; und
die Webdienst-Kontextinformationen umfassen eines oder mehrere von Folgendem:
einen Webdienstanbieter, Dienstkategorieinformationen, eine Dauer und einen Verkehr.

6. Verfahren nach Anspruch 1, wobei der Schritt B ferner Folgendes umfasst:
Bestimmen, dass der Webdienst online und/oder offline abgerechnet werden soll; und
Abbilden der Netzwerkinhaltsinformationen in Dienstinformationen entsprechend dem jeweiligen Unterdienst im Webdienst zum Erzeugen der zweiten Abrechnungsanforderung; und
wobei der Schritt C ferner Folgendes umfasst:
Senden der zweiten Abrechnungsanforderung an ein Online-Abrechnungssystem und/oder ein Offline-Abrechnungssystem entsprechend Informationen der Bestimmung, dass der Webdienst online und/oder offline abgerechnet werden soll.

7. Verfahren nach Anspruch 1, wobei der zu dem Webdienst zugehörige Datenspeicher eines von Folgenden umfasst:
einen Regelserver, einen Abrechnungsserver, eine Verwendungssteuerungseinheit, einen Positionierungsdienst, einen SMS-Dienst, einen MMS-Dienst, Anwesenheitsstatusinformationen, einen IMS-Dienst, einen Netzwerkressourcendienst, eine Verkehrsdetektionsfunktionseinheit und einen netzwerkbasierten oder nichtnetzwerkbasierten Benutzerauslegungs-Datenspeicher.

8. Verfahren nach Anspruch 1, wobei vor dem Schritt C das Verfahren ferner Folgendes umfasst: Normalisierung der zweiten Abrechnungsanforderung in eine mit einem Telekommunikationsnetzwerk kompatible zweite Abrechnungsanforderung; und
C. Senden der normalisierten zweiten Abrechnungsanforderung an das Abrechnungssystem.

9. Verfahren nach Anspruch 8, wobei der Schritt II ferner Folgendes umfasst:
Abrechnen des Webdienstes entsprechend der Netzwerkkontextinformationsbasis zu Anwendungsinformationen oder einer Benutzerkontenauslegung des Webdienstes.

10. Verfahren nach Anspruch 9, wobei die Netzwerkkontextinformationen eine oder mehrere der folgenden Dienstinformationen umfassen: Positionierungsdienstinformationen, QoS-Steuerdienstinformationen, Aufrufsteuerdienstinformationen, Abrechnungsdienstinformationen, Kurznachrichtendienstinformationen, Multimedia-Kurznachrichtendienstinformationen, Paketvermittlungsdienstinformationen, WLAN-Dienstinformationen, Push-to-Talk-Dienstinformationen, Multimedia-Telefoniedienstinformationen und Sofortnachrichtendienstinformationen.

11. Einrichtung (400) zum Einleiten einer Abrechnungsanforderung in einem Kommunikationsnetzwerk, wobei die Einrichtung Folgendes umfasst:
eine Webdienst-Netzwerkkontext-Abrufvorrichtung (401), ausgelegt zum Abrufen von Netzwerkkontextinformationen eines Webdienstes aus einem Datenspeicher entsprechend dem Webdienst in Reaktion auf eine erste Abrechnungsanforderung vom Webdienst;
eine Abrechnungsanforderungs-Erzeugungsvorrichtung (402), ausgelegt zum Erzeugen einer zweiten Abrechnungsanforderung aus den Netzwerkkontextinformationen; und
eine Abrechnungsanforderungs-Sendevorrichtung (403), ausgelegt zum Senden der zweiten Kartierungsanforderung an ein Kartierungssystem,
wobei die Webdienst-Netzwerkkontextinformations-Abrufvorrichtung ferner Folgendes umfasst:
eine Abrechnungsrichtlinien-Abrufvorrichtung, ausgelegt zum Abrufen einer Abrechnungsrichtlinie von einem Richtlinienserver, wobei die Abrechnungsrichtlinie eine Dienstkombination des Webdienstes anzeigt, und
eine Unterdienst-Netzwerkkontext-Abrufvorrichtung, ausgelegt zum Abrufen von Netzwerkkontextinformationen von jeweiligen Unterdiensten in der Dienstkombination aus Datenspeichern entsprechend den jeweiligen Unterdiensten.

## Revendications

1. Procédé d'initiation d'une requête de facturation de service web dans un réseau de communication, le procédé comprenant les étapes consistant à :
A. récupérer (S201) des informations de contexte de réseau d'un service Web à partir d'un référentiel de données correspondant au service Web en réponse à une première requête de facturation du service Web ;
B. générer (S202) une deuxième requête de facturation à partir des informations de contexte du réseau ; et
C. transmettre (S203) la deuxième requête de facturation à un système de facturation,
A1. récupérer une politique de facturation à partir d'un serveur de politiques, la politique de facturation indiquant une combinaison de services du service Web ; et
A2. récupérer des informations de contexte du réseau des sous-services respectifs dans la combinaison de services à partir de référentiels de données correspondant aux sous-services respectifs.

2. Procédé selon la revendication 1, une entité réalisant l'étape A, l'étape B et l'étape C étant une passerelle de service Web ou étant une passerelle d'accès du service Web.

3. Procédé selon la revendication 1, dans l'étape A2, les sous-services respectifs dans la combinaison de services comprenant un ou plusieurs des éléments suivants :
un service de positionnement, un service de contrôle de la qualité de service, un service de contrôle des appels, un service de facturation, un service de messages courts, un service de messages courts multimédias, un service de commutation de paquets, un service WLAN, un service de messagerie vocale instantanée, un service téléphonique multimédia et un service de messagerie instantanée.

4. Procédé selon la revendication 1, la politique de facturation dans l'étape A1 étant générée à partir d'une ou plusieurs des informations suivantes du service Web :
des informations de contexte mobiles,
un service d'activation d'opérateur mobile invoqué,
une politique de facturation du réseau, et
des informations contextuelles sur les services Web.

5. Procédé selon la revendication 4, les informations de contexte mobiles comprenant une ou plusieurs des informations suivantes du service web :
un emplacement, un statut d'itinérance, un statut de présence et une technologie d'accès ;
le service activateur de l'opérateur mobile invoqué comprenant un ou plusieurs des services :
un service de messagerie courte, un service de messagerie courte multimédia et un service de messagerie instantanée ;
la politique de facturation du réseau comprenant un ou plusieurs des éléments suivants :
un service mobile à large bande, une priorité de fourniture de services et un mécanisme de facturation ; et
les informations de contexte du service Web comprenant un ou plusieurs des éléments suivants :
un fournisseur de services web, des informations sur les catégories de services, une durée et un trafic.

6. Procédé selon la revendication 1, l'étape B comprenant en outre :
la détermination que le service Web sera facturé en ligne et/ou hors ligne ; et
le mappage des informations de contenu du réseau sur les informations de service correspondant respectivement au sous-service respectif dans le service Web pour générer la deuxième requête de facturation ; et
l'étape C comprenant en outre :
la transmission de la deuxième requête de facturation à un système de facturation en ligne et/ou à un système de facturation hors ligne en fonction des informations de détermination que le service Web doit être facturé en ligne et/ou hors ligne.

7. Procédé selon la revendication 1, le référentiel de données correspondant au service web comprenant l'un quelconque de :
un serveur de règles, un serveur de facturation, une entité de contrôle de l'utilisation, un service de positionnement, un service SMS, un service MMS, des informations d'état de présence, un service IMS, un service de ressources réseau, une entité de fonction de détection de trafic et un dépôt de données de configuration utilisateur réseau ou non réseau.

8. Procédé selon la revendication 1, avant l'étape C, le procédé comprenant en outre : la normalisation de la deuxième requête de facturation en une deuxième requête de facturation compatible avec un réseau de télécommunication ; et
C. la transmission de la deuxième requête de facturation normalisée au système de facturation.

9. Procédé selon la revendication 8, l'étape II comprenant en outre :
la facturation du service Web en fonction de la base d'informations du contexte réseau sur la base des informations de l'application ou d'une configuration du compte utilisateur du service Web.

10. Procédé selon la revendication 9, les informations de contexte de réseau comprenant une ou plusieurs des informations de service suivantes :
des informations de service de positionnement, des informations de service de contrôle de la qualité, des informations de service de contrôle des appels, des informations de service de facturation, des informations de service de messagerie courte, des informations de service de messagerie courte multimédia, des informations de service de commutation de paquets, des informations de service WLAN, des informations de service de messagerie vocale instantanée, des informations de service de téléphonie multimédia et des informations de service de messagerie instantanée.

11. Appareil (400) pour initier une requête de facturation dans un réseau de communication, l'appareil comprenant :
un dispositif de récupération de contexte de réseau de service Web (401) configuré pour récupérer des informations de contexte de réseau d'un service Web à partir d'un référentiel de données correspondant au service Web en réponse à une première requête de facturation du service Web ;
un dispositif de génération de requête de facturation (402) configuré pour générer une seconde requête de facturation à partir des informations de contexte réseau ; et
un dispositif de transmission de requête de facturation (403) configuré pour transmettre la seconde requête de cartographie à un système de cartographie,
le dispositif de récupération d'informations de contexte de réseau de service web comprenant en outre :
un dispositif de récupération de politique de facturation configuré pour récupérer une politique de facturation à partir d'un serveur de politiques, la politique de facturation indiquant une combinaison de services du service Web ; et
un dispositif de récupération d'informations de contexte de réseau de sous-service configuré pour récupérer des informations de contexte de réseau de sous-services respectifs dans la combinaison de services à partir de dépôts de données correspondant aux sous-services respectifs.
